# EUROPEAN PATENT APPLICATION

(11) **EP 4 286 637 A1**
(43) Date of publication of application: **06.12.2023**
(21) Application number: 22746277.7
(22) Date of filing: 28.01.2022
(51) Int. Cl.: E05F 15/46, E05F 15/73, G01L 1/14, G01N 27/02, G01N 27/22, B60R 16/02, G01D 5/24

(54) **NON-CONTACT-TYPE PINCH PREVENTION DEVICE**

(30) Priority: 28.01.2021 KR 20210012525; 17.08.2021 KR 20210108172
(71) Applicant: Vitonet Ap Co., Ltd., Cheonan-si, Chungcheongnam-do 31214 (KR)
(72) Inventor: SONG, Won Chul, Seoul 07005 (KR); YOON, Young Pyo, Cheonan-si, Chungcheongnam-do 31214 (KR); JU, Young Ju, Seongnam-si, Gyeonggi-do 13597 (KR)
(74) Representative: Gulde & Partner
(86) International application number: PCT/KR2022/001561
(87) International publication number: WO 2022/164251

(57) **Abstract**

A non-contact-type pinch prevention device suppressing the distortion of reception signals, caused by noise around an anti-pinch strip, to increase the reliability of a sensing operation for detecting a human body comprises: an anti-pinch strip which includes first and second lead wires buried in a strip body to be spaced from each other, and which allows the first lead wire to receive and output a sensing signal radiated through the second lead wire; a sensor board, which is connected to the first and second lead wires of the anti-pinch strip, generates the sensing signal in the second lead wire, and determines whether the human body is detected, according to the signal received by the first lead wire; and a control unit for performing a control operation corresponding to a body pinch situation according to a determination signal of the sensor board.

## Description

### [Technical Field]

The present invention relates to a pinch prevention device that suppresses distortion of a received signal due to noise around an anti-pinch strip, excluding influence of electromagnetic waves generated by a sensor itself, and uses a capacitance change, and relates to a pinch prevention device which can prevent a human body from being pinched by detecting whether the human is pinched in a non-contact approach state to prevent pinch accidents by industrial machines and pinch accidents by doors.

### [Background Art]

In recent years, in many industrial fields, the opening or closing of doors has been automated, and accordingly, accidents in which human bodies are pinched often occur. The automation of the opening or closing of the doors is widely applied to electric windows of vehicles using power tailgates (PTGs), entrance doors of subways and trains using a sliding door method, entrance doors of buildings, elevator doors, screen doors, revolving doors, and the like. Accordingly, various pinch prevention devices have been proposed to prevent accidents in which human bodies are pinched.

A technology in which a laser reception unit receives a laser beam irradiated from a laser emission unit to detect a pinch state of an object is disclosed as such a pinch prevention device. When the above-described light beam is used, as the laser emission unit and the laser reception unit that are expensive equipment are used, an economic burden on a user increases. Further, when a vehicle is operated under adverse conditions such as on unpaved roads, the laser emission unit and the laser reception unit malfunction due to vibration generated during the operation of the vehicle or sensing sensitivity is lowered due to foreign substances such as dust.

Further, in a technology of monitoring rotation of a motor that opens or closes a door to detect pinching of an object, when a pinch accident in which a human body is pinched by the door occurs, a mechanical pressure is measured, and when the pressure exceeds 10 kgf, the motor is stopped to prevent the pinch accident. However, in this method, even when the same pressure is applied, in the case of relatively weak children or the elderly compared to general adults, an impact applied to the human body is large, and thus relatively weak children or the elderly may be injured.

An example of the technology for solving such a problem is disclosed in the following patent documents.

That is, Patent Document 1 (Korean Patent Registration No. 10-1198628 (registered on November 1, 2012)) discloses a structure which corresponds to a manner in which an anti-pinch strip is mounted on a side surface of a power sliding door, which is adjacent to an entrance of a vehicle, and a sensor of the anti-pinch strip detects a pinch of an obstacle in the door, and in which non-conductive rubber is formed outside a sensor unit, front conductive rubber in which a wire is embedded and rear conductive rubber in which another wire is embedded are arranged inside the non-conductive rubber, and a hollow is formed between the front conductive rubber and the rear conductive rubber.

Further, Patent Document 2 (Korean Patent Registration No. 10-1974193 (registered on April 24, 2019)) discloses a technology which corresponds to a finger pinch prevention device that, when a sliding door is opened, and when a sensor provided inside an elastic body is in contact due to a finger or foreign substances being pinched, detects the contact, and immediately drives the sliding door in a reverse direction and in which, when the finger or foreign substances are pinched, the finger or foreign substances are pushed in an opposite direction along the sliding door, and thus malfunction of the sliding door can be prevented and the finger or foreign substances are protected.

Meanwhile, Patent Document 3 (Korean Patent Registration No. 10-2245816 (registered on April 22, 2021)) discloses a configuration which corresponds to an elevator gap pinch detection device that prevents a pinch accident to prevent a body part, such as a finger, from being suctioned along an elevator door as the elevator door is opened and which includes a detection sensor unit that includes a light emission unit positioned above a space of a first body part and a light reception unit formed below the first body part, which face each other with the first body part interposed therebetween, and a controller that, when a light beam emitted from the light emission unit of the detection sensor unit does not reach the light reception unit, detects this state, and stops driving of the elevator door.

### [Disclosure]

### [Technical Problem]

In the technology disclosed in Patent Document 1 as described above, since a non-conductive rubber is exposed, an obstacle detection impact is directly transmitted, and thus the sensitivity is slightly improved. However, since a sensing operation is unstable in a curved mounting area, sensing errors occur, and the technology is vulnerable to electromagnetic interference such as various noises.

Further, a finger pinch prevention device for a sliding door disclosed in Patent Document 2 is limited to a sliding door method in which an elastic body may be deformed due to a finger or foreign substances pinched in an installation space, the devices uses a method in which, when the finger or foreign substances are pinched by a gap between the door and a wall body, the pinched finger or foreign substances are detected, and thus an impact applied to a human body cannot be blocked.

Meanwhile, in an elevator gap pinch detection device of Patent Document 3, when a light emission unit or a light reception unit is contaminated by foreign substances such as dust, a detection device is not operated, and when contaminated light is input to the light reception unit, the detection device malfunctions.

The present invention is directed to providing a non-contact-type pinch prevention device which can increase the reliability of a sensing operation for recognizing a human body pinch state by suppressing signal distortion due to noise, and effectively cope with electromagnetic interference generated by a sensor itself.

The present invention is directed to also providing a non-contact-type pinch prevention device which can be easily installed anywhere regardless of an installation location or installation method.

The present invention is directed to also providing a non-contact-type pinch prevention device which can prevent injury of the human body and an impact applied to the human body by detecting occurrence of pinch in a non-contact approach state of the human body before a pinch accident of the human body occurs.

The present invention is directed to also providing a non-contact-type pinch prevention device which can prevent the pinch accident by detecting occurrence of the pinch even when a non-conductive object is inserted into a detection sensor or a surface of the detection sensor is contaminated by foreign substances.

### [Technical Solution]

One aspect of the present invention provides a non-contact-type pinch prevention device including an anti-pinch strip that includes a first conducting wire and a second conducting wire buried in a strip body while spaced apart from each other, and receives and outputs, through the first conducting wire, a detection signal radiated through the second conducting wire, a sensor board that is connected to the first conducting wire and the second conducting wire of the anti-pinch strip, generates the detection signal in the second conducting wire, and determines whether a human body is detected according to the signal received by the first conducting wire, and a controller that performs a control operation coping with a human body pinch state according to a determination signal of the sensor board.

Another aspect of the present invention provides a non-contact-type pinch prevention device including a sensor strip including a sensor body provided on a frame to detect a change in a capacitance or a change in an electric field according to an approach or contact state of a human body, and a plurality of strip electrodes provided inside the sensor body to form at least one capacitance, a signal processing unit that measures and compares an amount of change in the capacitance or an amount of change in the electric field detected through the sensor strip with a preset reference value, and outputs a pinch occurrence signal when the amount of change in the capacitance or the amount of change in the electric field is greater than or equal to the reference value, and a controller that controls an operation of a motor for moving the frame according to the pinch occurrence signal output from the signal processing unit.

### [Advantageous Effects]

As described above, according to a non-contact-type pinch prevention device, one conducting wire buried in a strip body radiates a detection signal, the other one conducting wire processes a signal received as the radiated signal, and thus a human body can be detected. Electromagnetic wave interference caused by noise can be suppressed by applying a frequency hopping method in which a frequency of a detection signal generated by a signal generator is changed.

According to the non-contact-type pinch prevention device according to the present invention, the signal received through the conducting wire buried in the strip body is filtered using a band filter unit, distortion of the received signal caused by noise around an anti-pinch strip is suppressed, and thus the reliability of a sensing operation can increase.

Further, according to the non-contact-type pinch prevention device, a reverse-phase signal having a phase opposite to that of the detection signal is radiated through the conducting wire buried in the strip body, the detected signal and the reverse-phase signal are canceled to each other in a faraway area, an effect on nearby electrical appliances or electronic devices is minimized, and thus the reliability of a sensing operation can increase.

Further, according to the non-contact-type pinch prevention device according to the present invention, a non-contact manner and a contact manner are mixedly applied, a human body pinch state can be detected according to a change in the capacitance or resistance formed between the two conducting wires arranged opposite to each other with respect to the hollow part when an external force due to contact with the human body is applied to the strip body, and thus operational stability can be secured in various usage environments.

Further, according to the non-contact-type pinch prevention device according to the present invention, since the anti-pinch strip is manufactured in a thin strip shape and is thus bent to correspond to the shape of an object, the non-contact-type pinch prevention device can be easily and conveniently installed, and can be applied to various fields such as sliding doors of vehicles, trunk doors, elevator doors, and subway doors.

Further, the non-contact-type pinch prevention device according to the present invention can be easily installed anywhere regardless of an installation location or installation method.

Further, according to the non-contact-type pinch prevention device according to the present invention, occurrence of the pinch is detected in a non-contact approach state of the human body before the human body is pinched, and thus injury of the human body and an impact applied to the human body can be prevented.

Further, according to the non-contact-type pinch prevention device according to the present invention, even when a non-conductive object is inserted into a detection sensor or a surface of the detection sensor is contaminated by foreign substances, the occurrence of the pinch is detected, and thus a pinch accident can be prevented.

### [Description of Drawings]

FIG. 1 is a block diagram of a pinch prevention device using a non-contact-type human body detection sensor according to a first embodiment of the present invention.
FIG. 2 is a detailed diagram of a main part illustrated in FIG. 1.
FIG. 3 is a cross-sectional view of an ant-pinch strip illustrated in FIG. 1.
FIG. 4 is a block diagram of a pinch prevention device using a non-contact-type human body detection sensor according to a second embodiment of the present invention.
FIG. 5 is a detailed diagram of a main part illustrated in FIG. 4.
FIG. 6 is a cross-sectional view of an ant-pinch strip illustrated in FIG. 4.
FIG. 7 is a block diagram of a pinch prevention device using a non-contact-type human body detection sensor according to a third embodiment of the present invention.
FIG. 8 is a detailed diagram of a main part illustrated in FIG. 7.
FIG. 9 is a cross-sectional view of an ant-pinch strip illustrated in FIG. 7.
FIG. 10 is a view for describing a change in an electric field according to approach of a human body applied to a fourth embodiment of the present invention.
FIG. 11 is a diagram illustrating a pinch prevention device according to the fourth embodiment of the present invention.
FIG. 12 is a cross-sectional view of an example of a sensor strip illustrated in FIG. 11.
FIG. 13 is a block diagram for describing a configuration of a signal processing unit illustrated in FIG. 11.
FIG. 14 is a cross-sectional view of another example of a sensor strip illustrated in FIG. 11.
FIG. 15 is a view for describing output of a pinch occurrence signal according to a human body approach state in the pinch prevention device according to the fourth embodiment of the present invention.
FIG. 16 is a picture of the sensor strip manufactured according to the fourth embodiment of the present invention.

### [Modes of the Invention]

Hereinafter, the present invention will be described by describing embodiments of the present invention with reference to the accompanying drawings. The same reference numerals in each drawing indicate the same components. Further, In the description of the present disclosure, when it is determined that the detailed description of related widely known functions or configurations may make the subject matter of the present invention unclear, the detailed description will be omitted. Further, when a part includes a component, this means that another component is not excluded but may be further included unless otherwise stated.

Meanwhile, the term "pinch accident" applied to the present invention means accidents occurring at a narrowness point, a pinch point, a cut point, a bite point, and a tangential bite point at which a body or a portion of the body is pinched, bitten, or rolled between moving parts of industrial machines (press machines or the like) or between a moving part and a fixed part or pinch accidents caused by an elevator door, a subway door, an automatic door, and a power window or power sliding door of a vehicle.

Further, in a non-contact-type pinch prevention device according to an embodiment of the present invention, in order to prepare for occurrence of a pinch caused by carelessness of a user when the sliding door of the vehicle is driven, an anti-pinch function of automatically stopping the sliding door or driving the sliding door in an opposite direction using a sensor board is provided, and thus the safety of the user can be secured. Such a pinch prevention device may be applied to various technical fields in which a driven object is driven using an electric motor. For example, when an automatic opening/closing system which can automatically open or close a side door, a trunk door, a window, and a sunroof as an accessory mounted on the vehicle is adopted as one of user convenience functions, the pinch prevention device may be added as a door safety device. As another example, when an automatic opening/close method as in a building elevator door or a subway door is adopted, the pinch prevention device may be added as a door safety device.

Further, the pinch prevention device according to the present invention is a device which can prevent a pinch accident as described above and is a technology related to a non-contact sensor system for safety of a vehicle door and a window using detection of a change in an impedance (R, C) of a sensor according to approach of a human body. For example, the pinch prevention device may be applied to a safety technology in which when a part of the human body is pinched in a state in which a door is being closed, and when a sensor output is greater than or equal to a predetermined value by using the change of the impedance of the sensor mounted on the door, this state is detected, an open signal is generated, the door is opened, and thus the human body is not shocked and is not harmed.

Hereinafter, embodiments according to the present invention will be described with reference to the drawings.

### [First Embodiment]

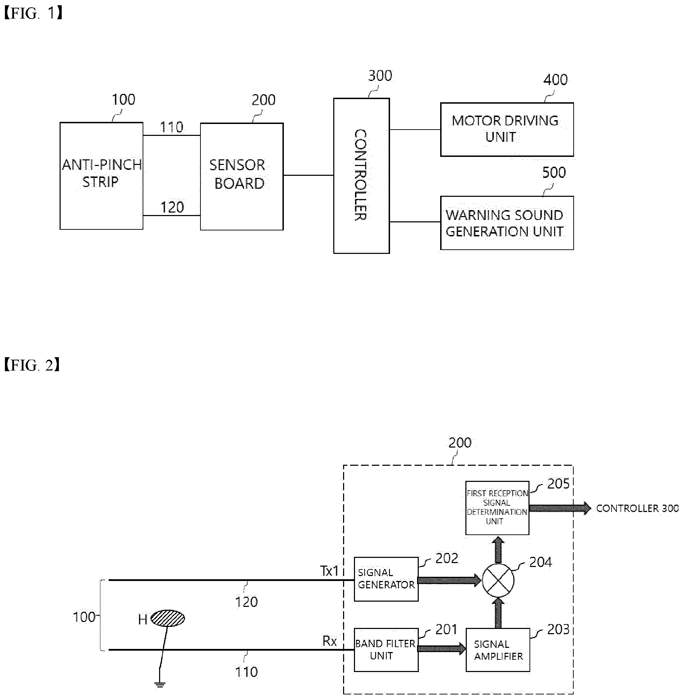

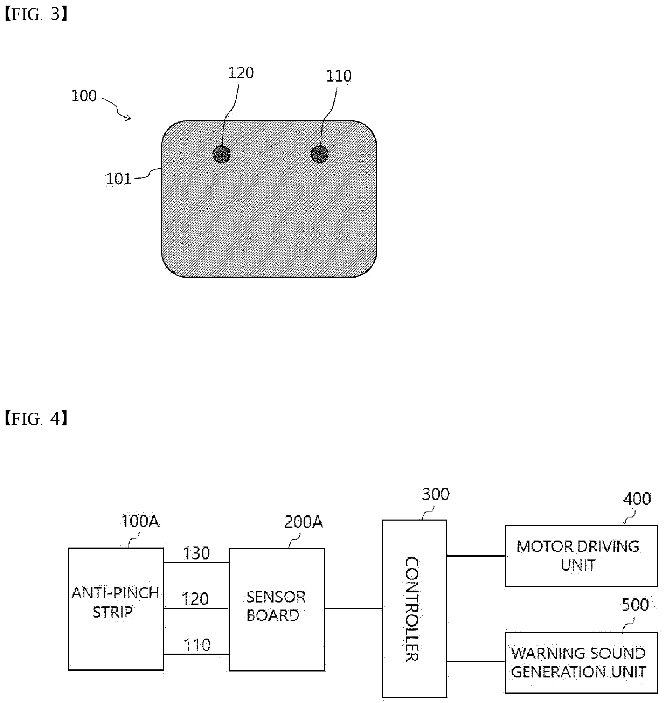

A first embodiment will be described with reference to FIGS. 1 to 3. FIG. 1 is a block diagram of a pinch prevention device using a non-contact-type human body detection sensor according to a first embodiment of the present invention, FIG. 2 is a detailed diagram of a main part illustrated in FIG. 1, and FIG. 3 is a cross-sectional view of an ant-pinch strip illustrated in FIG. 1.

As illustrated in FIG. 1, the non-contact-type pinch prevention device according to the first embodiment of the present invention uses a human body detection sensor and detects a human body adjacent to an anti-pinch strip 100 mounted on a driven object in a non-contact manner, and therefore, may include the anti-pinch strip 100, a sensor board 200, a controller 300, a motor driving unit 400, and a warning sound generation unit 500.

The anti-pinch strip 100 may be formed in a strip shape that is bent to correspond to the shape of a side portion of the driven object, for example, the door, and may detect approach in a non-contact manner when the human body approaches the anti-pinch strip 100.

The sensor board 200 is electrically connected to first and second conducting wires 110 and 1120 buried in the anti-pinch strip 100, generates a detection signal in the first conducting wire 110 and determines whether the human body is detected on the basis of a reception signal received from the second conducting wire 120.

The controller 300 performs a control operation corresponding to a human body pinch state according to a determination signal of the sensor board 200. When a human body pinch state is detected, the controller 300 may control the motor driving unit 400 to stop the driving motor or drive the motor in an opposite direction to move the driven object (the door), thereby preventing accidents caused by the pinch of the human body. Further, the controller 300 outputs a warning sound through the warning sound generation unit 500 so that the occurrence of the pinch with an external user may be checked.

Referring to FIGS. 2 and 3, a strip body 101 may be made of an insulating rubber material, and may be molded by, for example, supplying a thermoplastic elastomer (TPE) to an injection molding machine.

The first conducting wire 110 and the second conducting wire 120 are buried inside the strip body 101 of the anti-pinch strip 100 while being spaced a predetermined distance from each other.

As illustrated in FIG. 2, when the human body approaches the anti-pinch strip 100, a capacitance between the first conducting wire 110 and the second conducting wire 120 is changed according to whether a human body is present. When the human body H is present, the reception signal is attenuated in the first conducting wire 110, and the pinch state of the human body can be recognized using a change in the signal.

As illustrated in FIG. 2, the first conducting wire 110 is connected to a band filter unit 201 of the sensor board 200, and the second conducting wire 120 is connected to a signal generator 202 of the sensor board 200.

The signal generator 202 generates a detection signal Tx1 and radiates the detection signal Tx1 through the second conducting wire 120. The signal generator 202 generates the detection signal having a preset frequency band, the frequency of the detection signal does not need to be specified, and for example, the detection signal having a frequency of several Hz to several tens of kHz may be radiated through the second conducting wire 120. In this case, the signal generator 202 may adopt a frequency hopping method in which the frequency of the detection signal changes according to a predetermined pattern. In this case, electromagnetic wave interference caused by noise can be further suppressed.

The first conducting wire 110 receives the signal radiated through the second conducting wire 120, and the received signal Rx is applied to the band filter unit 201 connected to the first conducting wire 110.

In this case, since the signal applied to the band filter unit 201 may include not only the radiation signal of the second conducting wire 120 but also various noises generated in the surroundings, the band filter unit 201 filters the signal to selectively extract a signal having a preset frequency band corresponding to the signal Rx received through the first conducting wire 110.

The signal filtered by the band filter unit 201 is amplified to a certain intensity by a signal amplifier 203 and is then applied to a signal mixer 204.

The signal mixer 204 receives the detection signal Tx1 of the signal generator 202 and the reception signal amplified by the signal amplifier 203.

The signal mixer 204 extracts a signal having a frequency that coincides with a frequency of the detection signal Tx1 input from the signal generator 202 among the reception signal input through the signal amplifier 203 and outputs the extracted signal to a first reception signal determination unit 205.

The first reception signal determination unit 205 determines whether the human body is detected by comparing the extracted signal received from the signal mixer 204 with a preset reference value. Here, the extracted signal provided to the first reception signal determination unit 205 may have the same frequency as the detection signal Tx1 radiated from the second conducting wire 120 and have an intensity different from that of the detection signal Tx.

The first reception signal determination unit 205 determines whether the human body is detected by comparing the intensity of the extracted signal with a reference value and applies a human body detection signal to the controller 300. Accordingly, the controller 300 may control the motor driving unit 400 and the warning sound generation unit 500 according to the human body detection signal to prevent an accident caused by the pinched human body.

### [Second Embodiment]

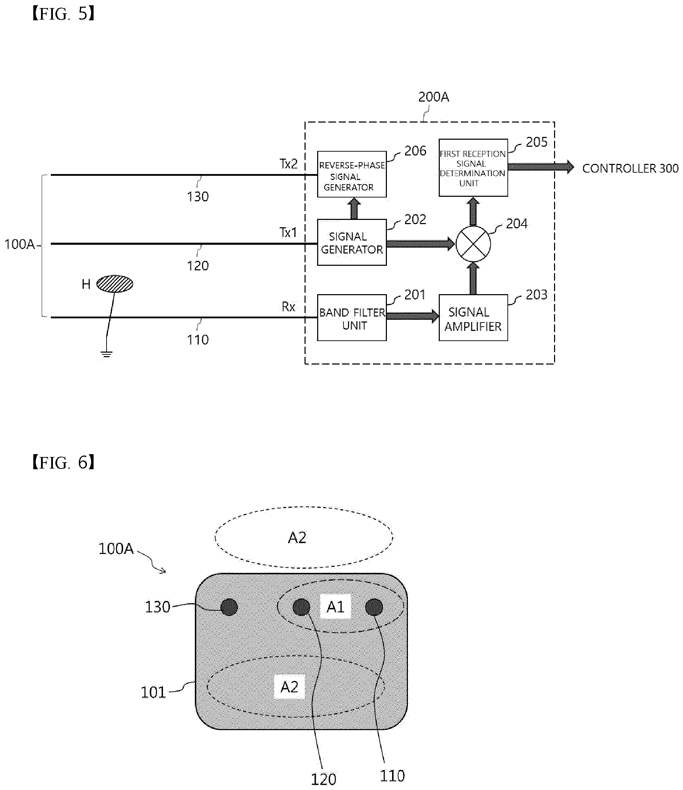

A second embodiment will be described with reference to FIGS. 4 to 6. FIG. 4 is a block diagram of a pinch prevention device using a non-contact-type human body detection sensor according to a second embodiment of the present invention, FIG. 5 is a detailed diagram of a main part illustrated in FIG. 4, and FIG. 6 is a cross-sectional view of an ant-pinch strip illustrated in FIG. 4.

In the above-described first embodiment, when the output of the signal generator 202 is excessive in a process of radiating the detection signal through the second conducting wire 120, the excessive output may adversely affect nearby electrical appliances and electronic devices, and thus a reverse phase signal having a phase opposite to that of the detection signal of the signal generator 202 needs to be generated to remove the excessive output.

As illustrated in FIGS. 4 and 5, the pinch prevention device according to the second embodiment differs from the pinch prevention device according to the first embodiment in that some components of an anti-pinch strip 100A and a sensor board 200A are added, but the components performing the same functions as those according to the first embodiment will be described while being designated by the same reference numerals.

In the second embodiment, in parallel with a technology of filtering a signal having a preset frequency band using the band filter unit 201 of the sensor board 200A to cope with sensor errors due to noise, the anti-pinch strip 100A includes a third conducting wire 130 buried in the strip body 101, and the sensor board 200A includes a reverse-phase signal generator 206 that generates a reverse-phase signal in the third conducting wire 130.

The reverse phase signal generator 206 receives the detection signal from the signal generator 202 and radiates the reverse-phase signal having an opposite phase through the third conducting wire 130. As illustrated in FIG. 6, the second conducting wire 120 and the third conducting wire 130 are buried on the side of the first conducting wire 110 inside the strip body 101 while being spaced a predetermined distance from each other, and an interval between the second conducting wire 120 and the first conducting wire 110 is formed to be smaller than an interval between the third conducting wire 130 and the first conducting wire 110.

In an area A1 adjacent to the second conducting wire 120 and the first conducting wire 110, the first conducting wire 110 may satisfactorily receive the detection signal radiated from the second conducting wire 120. In addition, in an area A2 relatively far from the second conducting wire 120 and the first conducting wire 110, the detection signal radiated from the second conducting wire 120 may be canceled by the reverse-phase signal radiated from the third conducting wire 130.

Even when a high output detection signal generated by the signal generator 202 is radiated from the second conducting wire 120 and is present in the area A2 around the strip body 101, the high output detection signal is canceled by the reverse-phase signal of the third conducting wire 130, and thus the first conducting wire 110 buried to be close to the adjacent area A1 may faithfully receive the detection signal of the second conducting wire 120. Accordingly, the first conducting wire 110 receives the detection signal radiated from the second conducting wire 120, and the received signal Rx is applied to the band filter unit 201 connected to the first conducting wire 110.

Thereafter, the band filter unit 201 filters the received signal Rx of the first conducting wire 110 to extract a signal having a preset frequency band, and the signal filtered by the band filter unit 201 is amplified to a certain intensity in the signal amplifier 203 and then applied to the signal mixer 204. The signal mixer 204 receives the detection signal Tx1 of the signal generator 202 and the reception signal of the signal amplifier 203. The signal mixer 204 extracts a signal having a frequency that coincides with a frequency of the detection signal Tx 1 input from the signal generator 202 among the reception signal input through the signal amplifier 203 and outputs the extracted signal to the first reception signal determination unit 205.

The first reception signal determination unit 205 determines whether the human body is detected by comparing the extraction signal received from the signal mixer 204 with a preset reference value and then applies the human body detection signal to the controller 300. Accordingly, the controller 300 may control the motor driving unit 400 and the warning sound generation unit 500 according to the human body detection signal to prevent an accident caused by the pinched human body.

### [Third Embodiment]

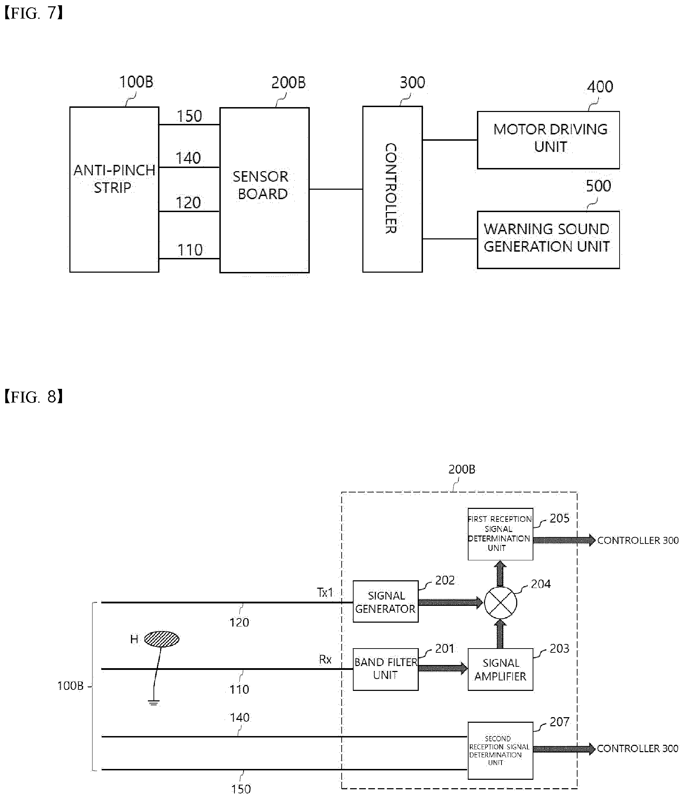

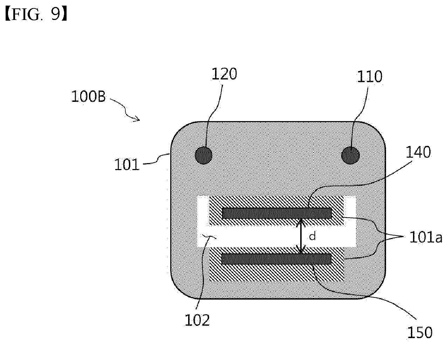

A third embodiment will be described with reference to FIGS. 7 to 9. FIG. 7 is a block diagram of a pinch prevention device using a non-contact-type human body detection sensor according to a third embodiment of the present invention, FIG. 8 is a detailed diagram of a main part illustrated in FIG. 7, and FIG. 9 is a cross-sectional view of an ant-pinch strip illustrated in FIG. 7.

The third embodiment is another modification of the first embodiment, and a method in which a non-contact-type pinch prevention device and a contact-type pinch prevention device are mixed is applied. In the third embodiment, when the human body approaches the strip body 101 in a non-contact state, even when a sensing operation of determining whether the human body is detected on the basis of the reception signal of the first conducting wire 110 fails, a human body detection state may be detected according to an external impact applied to the strip body 101 to prevent human body pinch accidents.

As illustrated in FIGS. 7 and 8, the pinch prevention device according to the third embodiment differs from the pinch prevention device according to the first embodiment in that some components of an anti-pinch strip 100B and a sensor board 200B are added, but the components performing the same functions will be described while being designated by the same reference numerals.

The anti-pinch strip 100B is additionally provided with a fourth conducting wire 140 and a fifth conducting wire 150 as well as the first conducting wire 110 and the second conducting wire 120. Further, the sensor board 200B is additionally provided with a second reception signal determination unit 207 connected to the fourth conducting wire 140 and the fifth conducting wire 150.

Referring to FIG. 9, the anti-pinch strip 100B may include a coated body 101a of a conductive material that is formed integrally with the strip body 101 made of a rubber material.

The coated body 101a may be molded by supplying a composite material of the TPE and a carbon nanotube (CNT) to an injection molding machine. Here, the coated body 101a has conductivity due to the CNT mixed in the TPE, and the mixing ratio of 20% to 60% by weight.

The plate-shaped fourth conducting wire 140 and the plate-shaped fifth conducting wire 150 are buried in a pair of coated bodies 101a while being spaced a predetermined distance d from each other. Further, a hollow part 102 is formed between the fourth conducting wire 140 and the fifth conducting wire 150.

When the human body comes into contact with the strip body 101 and an external force is applied, the distance d between the fourth conducting wire 140 and the fifth conducting wire 150 decreases, and thus a capacitance formed between the two conducting wires 140 and 150 changes. In addition, when the strip body 101 is strongly pressed by the human body, the pair of coated bodies 101a come into contact with each other, and thus a short circuit phenomenon may occur. Further, a resistance becomes very small due to this short circuit phenomenon.

In this way, when the external force is applied, the second reception signal determination unit 207 may recognize the human body detection state on the basis of the capacitance change or resistance change between the fourth conducting wire 140 and the fifth conducting wire 150 and may apply a human body detection signal to the controller 300.

When receiving any one of the human body detection signal from the first reception signal determination unit 205 in a non-contact manner and the human body detection signal from the second reception signal determination unit 207 in a contact manner, the controller 300 recognizes the human body pinch state and performs a corresponding control operation.

### [Fourth Embodiment]

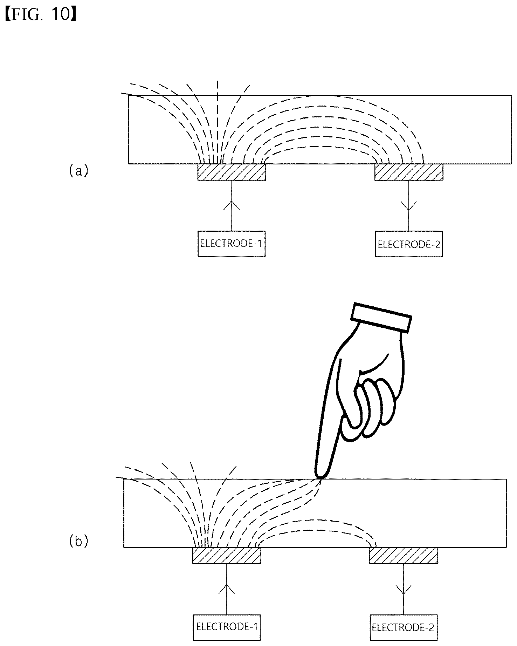

First, a change in an electric field between two electrodes according to the approach of the human body to which the fourth embodiment of the present invention is applied will be described with reference to FIG. 10.

FIG. 10 is a view for describing a change in an electric field according to the approach of the human body applied to a fourth embodiment of the present invention, FIG. 10A is a view illustrating an electric field formed by a capacitor provided between the two electrodes, and FIG. 10B is a view illustrating a change in the electric field when the human body approaches a space between the two electrodes.

As illustrated in FIG. 10A, a capacitor is formed by electrode 1 and electrode 2, and accordingly, an electric field is formed. When the human body does not approach the space, an electric field having a stable ring shape (or an elliptical shape), which is connected from a positive charge to a negative charge of the capacitor provided between the two electrodes is formed. Electrode 1 and electrode 2 may be formed of, for example, a conductor or metal or a conductive resin.

Meanwhile, as illustrated in FIG. 10B, when the human body, for example, a hand, approaches the space between electrode 1 and electrode 2, an electric field is formed between a positive electrode charged with positive charges and the human body due to a capacitor newly formed therebetween.

Thus, as a portion of a signal of the electric field formed between the two electrodes before the human body approaches the space escapes into the human body, the original electric field before the human body approaches the space is distorted. In this case, a potential of the human body may be interpreted as the ground GND. That is, a capacitive value of the capacitor between electrode 1 and electrode 2 decreases, and the intensity of the signal transmitted from electrode 1 to electrode 2 decreases. In the present invention, a degree of the approach of the human body can be calculated and applied by detecting this change amount (a change in the capacitor or electric field).

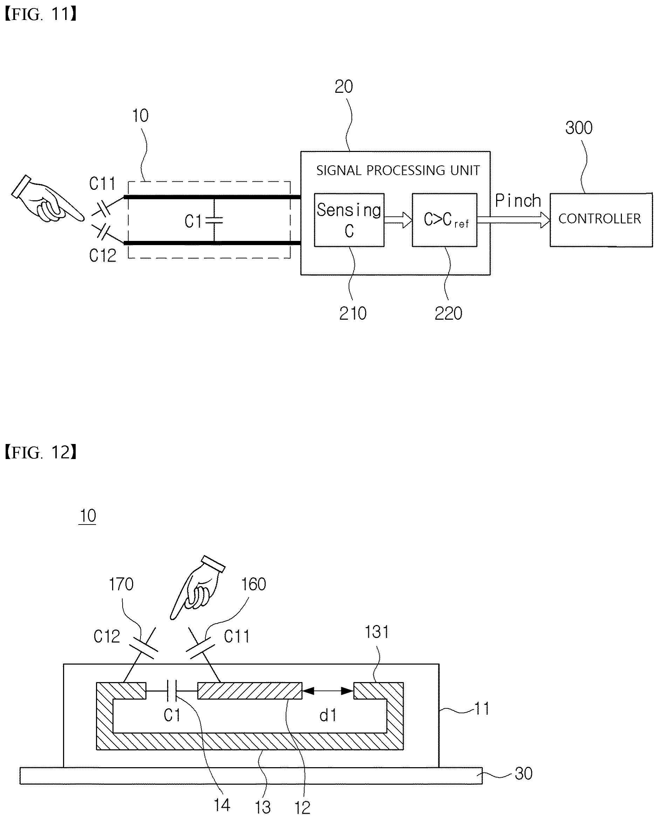

Next, the fourth embodiment of the present invention will be described with reference to FIGS. 11 to 13.

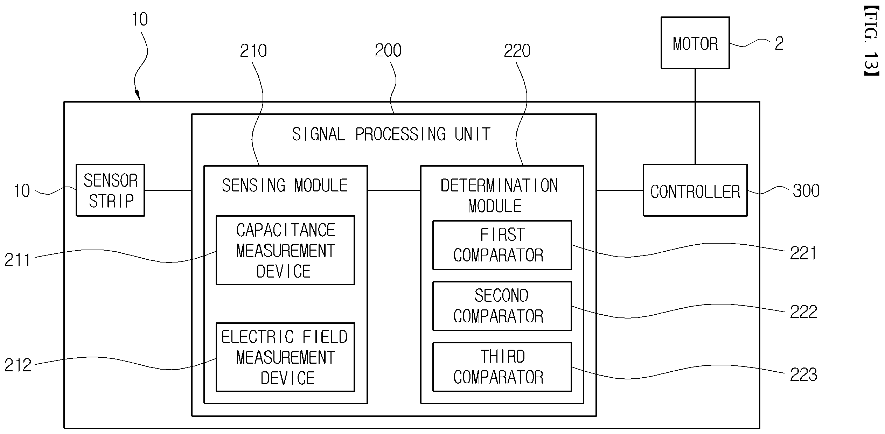

FIG. 11 is a diagram illustrating a pinch prevention device according to the fourth embodiment of the present invention, FIG. 12 is a cross-sectional view of an example of a sensor strip illustrated in FIG. 11, and FIG. 13 is a block diagram for describing a configuration of a signal processing unit illustrated in FIG. 11.

The non-contact-type pinch prevention device according to the fourth embodiment of the present invention can prevent malfunction of a detection device by detecting the occurrence of the pinch in a differentiated manner according to a non-contact approach state or a contact state of the human body.

For example, the pinch prevention device according to the fourth embodiment of the present invention may detect a change in the electric field when the human body is pinched in the non-contact approach state, control an electric motor 2 to stop an operation of the driven object such as the industrial machine or the door or drive the driven object in an opposite direction, and thus prevent pinch accidents for the human body. Alternatively, the pinch prevention device according to the fourth embodiment of the present invention may control an operation of the motor 2 that moves the driven object by detecting the occurrence of the pinch by a contact pressure of the human body.

The pinch prevention device according to the fourth embodiment of the present invention may be applied to various technical fields in which the driven object is moved through the electric motor 2. For example, the pinch prevention device according to the present invention is an electric vehicle window of a vehicle using a power tailgate (PTG) and may be also applied to electric automatic opening/closing systems that may automatically open and close a side door, a trunk door, a window, and a sunroof for the vehicle.

Further, the pinch prevention device according to the fourth embodiment may be also applied to entrance doors of subways and trains using a sliding door method, entrance doors of buildings, elevator doors, revolving doors, and the like.

As illustrated in FIGS. 11 and 12, the pinch prevention device according to the fourth embodiment of the present invention includes a sensor strip 10 including a plurality of strip electrodes, a signal processing unit 20, and the controller 300 for a motor.

As illustrated in FIG. 12, the sensor strip 10 may be provided on a frame 30 constituting the industrial machine, the elevator door, the subway door, the automatic door, the power window or power sliding door of the vehicle, or the like. That is, the sensor strip 10 may be provided on the frame 30 occurring at a narrowness point, a pinch point, a cut point, a bite point, and a tangential bite point at which a body or a portion of the body is pinched, bitten, or rolled between moving parts of industrial machines (press machines or the like) or between a moving part and a fixed part thereof or the frame 30 for the elevator door, the subway door, the automatic door, and the power window or power sliding door of the vehicle. However, the present invention is not limited thereto, and the sensor strip 10 may be provided at any one part of a component that damages to a part of the human body which is pinched due to a mechanical operation. To this end, the sensor strip 10 may be made of a dielectric elastomer having flexibility, such as rubber, silicone, or polyurethane, which is a material that may flexibly cope with mounting positions or conditions. Further, since the sensor strip 10 has flexibility and is configured as thin as possible, the thickness of the sensor is provided to be thin, and thus the sensor strip 10 may be easily attached to a curved frame or the like.

As illustrated in FIG. 12, the sensor strip 10 may include a sensor body 11 provided on the frame 30 and filled with a dielectric, a first strip electrode 12 and a second strip electrode 13 having a strip shape in the sensor body 11 and forming first capacitances C1 and 14 that induce a change in the electric field, and may detect a change in the first capacitance 14 or the change in the electric field according to the non-contact approach state or contact state of the human body.

As illustrated in FIG. 12, the sensor body 11 may be provided such that the first strip electrode 12 and the second strip electrode 13 are embedded therein and may be made of a dielectric elastomer having flexibility, such as rubber, silicone, or polyurethane.

The first strip electrode 12 and the second strip electrode 13 are provided as conductors that conduct electricity, the first strip electrode 12 may function as a receiver that receives a signal, and the second strip electrode 13 may function as a transmitter that emits a specific signal.

The first strip electrode 12 and the second strip electrode 13 are spaced an appropriate distance d1 from each other, face each other, are provided in parallel to each other, are provided such that a charge C1 is charged between the electrodes, and are formed to have a thin strip shape. That is, in the first strip electrode 12 and the second strip electrode 13, a rate at which a value of an additional capacitance C is generated varies according to the length of the distance d1. When the distance d1 is long, a small capacitance C is generated, and when the distance d1 is short, a large capacitance C is generated.

Accordingly, the sensor strip 10 according to the fourth embodiment of the present invention may be easily and simply installed and may be easily mounted anywhere regardless of an installation space or installation method. For example, the sensor strip 10 according to the present invention may be flexibly bent to correspond to the shape of the frame 30 and thus may be easily attached even to a curved installation location.

Further, as illustrated in FIG. 12, the first strip electrode 12 and the second strip electrode 13 according to the fourth embodiment of the present invention may be sealed by a dielectric within the sensor body 11 to block contamination of the electrodes due to foreign substances such as moisture or dust.

Further, as illustrated in FIG. 12, in the sensor strip 10 according to the fourth embodiment of the present invention, the first strip electrode 12 is provided inside the second strip electrode 13, the second strip electrode 13 is spaced apart from the first strip electrode 12 and is configured to cover a lower end and both side surfaces of the first strip electrode 12, and thus external noise for the sensor strip 10 can be reduced, and maximum sensitivity characteristics can be implemented. That is, the second strip electrode 13 surrounding the first strip electrode 12 may further include an extension part 131 formed coplanar with the first strip electrode 12 to increase a sensing effect of the human body or the conductor.

Meanwhile, the first strip electrode 12 and the second strip electrode 13 may be made of a conductor such as a metal or a conductive resin, charges having different polarities are charged between the first and second strip electrodes 12 and 13 facing each other, and thus the first capacitance 14 is formed between the first and second strip electrodes 12 and 13. That is, the dielectric constituting the sensor body 11 is filled between the first strip electrode 12 and the second strip electrode 13 buried in the sensor body 11, the first strip electrode 12 and the second strip electrode 13 are spaced apart from each other, and thus the first capacitance 14 is formed between the first strip electrode 12 and the second strip electrode 13.

The first capacitance 14 may have a capacitance value determined according to preset cross-sectional sizes of the first strip electrode 12 and the second strip electrode 13 and the distance d1 between the first strip electrode 12 and the second strip electrode 13.

As described above, as illustrated in FIG. 10A, a stable electric field is formed between the first strip electrode 12 and the second strip electrode 13 due to the first capacitance 14 formed by the first strip electrode 12 and the second strip electrode 13 provided inside the sensor body 11.

In this case, as illustrated in FIG. 10B, when the human body approaches the sensor strip 10, and when the human body approaches the space between the first strip electrode 12 and the second strip electrode 13, the electric field changes. Thus, as illustrated in FIG. 12, a second capacitance C11 and 160 or a third capacitance C12 and 170 may occur between the first strip electrode 12 or the second strip electrode 13 and the human body.

The second capacitance 160 and the third capacitance 170 may change according to an approach distance between the sensor body 11 and the human body, that is, an approach distance between the first and second strip electrodes 12 and 13 and the human body.

That is, the second capacitance 160 and the third capacitance 170 are generated due to a potential difference between the first and second strip electrodes 12 and 13 and the conductor such as the human body when the conductor approaches the first and second strip electrodes 12 and 13. Further, the second capacitance 160 and the third capacitance 170 increase as the distances between the human body and the first and second strip electrodes 12 and 13 decrease.

Further, since the second capacitance 160 and the third capacitance 170 are additionally generated, an electric field is formed between the first strip electrode 12 or the second strip electrode 13 and the human body.

Accordingly, as the human body approaches the space between the first strip electrode 12 and the second strip electrode 13, the electric field between the first strip electrode 12 and the second strip electrode 13 decreases, and a value of the first capacitance 14 between the first strip electrode 12 and the second strip electrode 13 decreases due to the decrease in the electric field.

Meanwhile, in the above description, a structure in which the first strip electrode 12 and the second strip electrode 13 are formed in parallel on the frame 30 has been described, but the present invention is not limited thereto. A distance between the first strip electrode 12 and the second strip electrode 13 may be adjusted such that the change in the electric field is efficiently detected while a sensitivity of the first capacitance C1 changes according to the interval, for example, the sensitivities of a portion close to a vehicle body that is the frame 30 and a portion far from the vehicle body are different. That is, the first strip electrode 12 and the second strip electrode 13 may be provided such that the sensitivity of the first capacitance C1 is detected differently according to the interval.

Next, a configuration of the signal processing unit 20 illustrated in FIG. 11 will be described with reference to FIG. 13.

As illustrated in FIGS. 11 and 13, the signal processing unit 20 may include a sensing module 210 and a determination module 220. The sensing module 210 may measure an amount of change in the capacitance or an amount of change in the electric field detected through the sensor strip 10.

That is, the sensing module 210 may include a capacitance measurement device 211 provided to measure the amount of change in the capacitance between the first strip electrode 12 and the second strip electrode 13, and an electric field measurement device 212 provided to measure the amount of change in the electric field between the first strip electrode 12 and the second strip electrode 13.

Further, the determination module 220 compares the measurement value measured through the sensing module 210 with a preset reference value, performs determination on the basis of the comparison result, and outputs a pinch occurrence signal when the amount of change in the first capacitance 14 or the amount of change in the electric field is greater than or equal to the reference value.

To this end, the determination module 220 may include a first comparator 221 and a second comparator 222.

The first comparator 221 compares the amount of change in the first capacitance 14 with a preset first reference value, and outputs the pinch occurrence signal when the amount of change in the first capacitance 14 is greater than the first reference value.

Further, the second comparator 222 compares the amount of change in the electric field between the first strip electrode 12 and the second strip electrode 13 with a preset second reference value, and outputs the pinch occurrence signal when the amount of change in the electric field is greater than the second reference value.

In this case, for example, as illustrated in FIG. 10A, the first reference value may be a value of the first capacitance 14 formed between the first strip electrode 12 and the second strip electrode 13 before the human body approaches the space between the first strip electrode 12 and the second strip electrode 13. Further, the second reference value may be a magnitude of the electric field formed between the first strip electrode 12 and the second strip electrode 13 before the human body approaches the space between the first strip electrode 12 and the second strip electrode 13.

In this way, when the sensor strip 10 approaches the human body, the first capacitance 14 or the magnitude of the electric field formed between the first strip electrode 12 and the second strip electrode 13 may decrease, and the signal processing unit 20 may determine an approach state of the human body with respect to the sensor strip 10 by detecting the amount of change in the first capacitance or the amount of change in the electric field due to the non-contact approach state of the human body.

The controller 300 of the motor may output a control signal of the electric motor 2 according to the above-described determination result by the signal processing unit 20. That is, when it is determined that the human body is pinched in an industrial machine, a door, or the like as the determination result by the signal processing unit 20, the controller 300 may stop the operation of the electric motor 2 or drive the electric motor 2 in an opposite direction, thereby preventing pinch accidents of the human body.

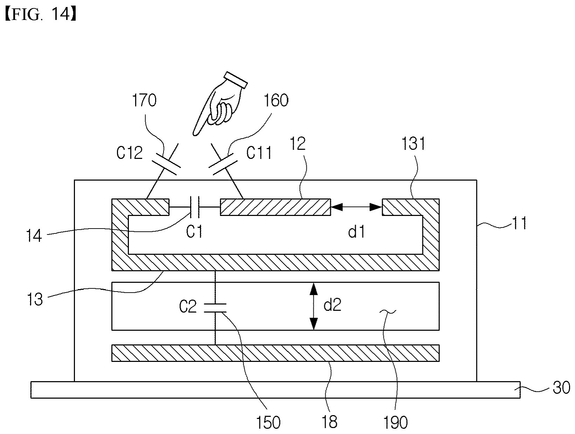

Next, another embodiment of the present invention will be described with reference to FIG. 14.

FIG. 14 is a cross-sectional view of another example of a sensor strip illustrated in FIG. 11.

As illustrated in FIG. 14, the sensor strip according to another embodiment of the present invention may include the sensor body 11, the first strip electrode 12, the second strip electrode 13, and a third strip electrode 18. Like the first strip electrode 12 functioning as a receiver, the third strip electrode 18 may function as a second receiver that receives a signal emitted from the transmitter that is the second strip electrode 13.

The sensor strip of FIG. 14 differs from the sensor strip 10 described above in FIG. 12 in that the third strip electrode 18 and a hollow part 190 maintaining an interval distance d2 are further provided below the second strip electrode 13. Further, in FIG. 14, a fourth capacitance C2 and 150 is formed between the second strip electrode 13 and the third strip electrode 18.

Thus, the sensor strip of FIG. 13 differs from the sensor strip 10 described above in FIG. 12 only in that the third strip electrode 18, the fourth capacitance 150, and the hollow part 190 are further provided. Thus, hereinafter, detailed descriptions of other components duplicated with the embodiment illustrated in FIG. 12 will be omitted.

As illustrated in FIG. 14, the sensor strip according to another embodiment of the present invention may include the sensor body 11 provided on the frame 30 and filled with a dielectric, and the first strip electrode 12, the second strip electrode 13, and the third strip electrode 18 having a strip shape in the sensor body 11 and spaced apart from each other such that different charges are charged between facing electrodes.

That is, as described above, the first capacitance 14 is formed between the first strip electrode 12 and the second strip electrode 13, the third strip electrode 18 is charged with electric charges having opposite polarity to that of the second strip electrode 130, and thus the fourth capacitance 150 may be formed between the second strip electrode 13 and the third strip electrode 18. Further, the hollow part 190 that may be deformed by an external contact pressure applied to the sensor body 11 is provided between the second strip electrode 13 and the third strip electrode 18.

Unlike the illustration of FIG. 12, in a structure illustrated in FIG. 14, when the external contact pressure is applied to a surface of the sensor strip 10, the interval distance d2 of the hollow part 190 between the second strip electrode 13 and the third strip electrode 18 is changed. For example, when a non-conductive object or the human body is pinched by the door, and when the door is closed and the hollow part 190 is pressed by the contact pressure applied to the sensor body 11, the distance d2 between the second strip electrode 13 and the third strip electrode 18 decreases.

Thus, the fourth capacitance 150 increases according to the interval distance d2 between the second strip electrode 13 and the third strip electrode 18, which decreases in proportion to the external contact pressure.

As described above, according to the structure of the sensor strip according to the generation of the fourth capacitance 150, in the signal processing unit 20 according to the fourth embodiment of the present invention, as illustrated in FIG. 13, the determination module 220 may further include a third comparator 223 that compares the amount of change in the fourth capacitance 150 with a preset third reference value, to measure the amount of change in the fourth capacitance 150 due to the external contact pressure applied to the sensor strip on the basis of the fourth capacitance 150 formed between the second strip electrode 13 and the third strip electrode 18.

That is, when the external contact pressure is applied to the sensor body 11 by the non-conductive object or the human body and thus the interval distance d2 decreases in the hollow part 190, the signal processing unit 20 measures the amount of change in the fourth capacitance 150 caused by the decrease in the distance d2 between the second strip electrode 13 and the third strip electrode 18.

When the amount of change in the fourth capacitance 150 is greater than the third reference value, the third comparator 223 outputs the pinch occurrence signal. In this case, the third reference value may be a value of the fourth capacitance 150 formed between the second strip electrode 13 and the third strip electrode 18 before the external contact pressure is applied to the sensor strip.

As described above, according to another embodiment of the present invention, the pinch occurrence signal may be output according to the contact state between the sensor strip and the human body, and the controller 300 may control the electric motor 2 to prevent pinch accidents or the like.

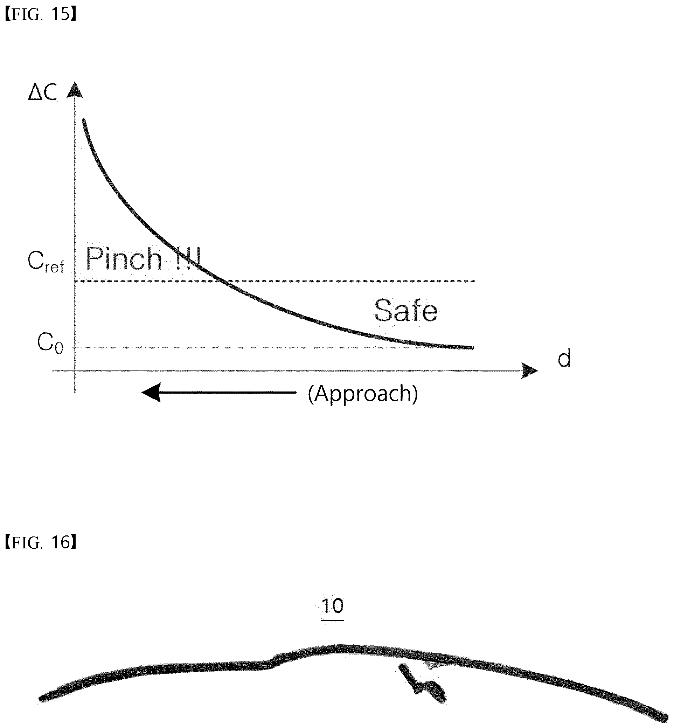

The output of the pinch occurrence signal as described above will be described with reference to FIG. 15.

FIG. 15 is a view for describing output of a pinch occurrence signal according to a human body approach state in the pinch prevention device according to the fourth embodiment of the present invention. That is, FIG. 15 illustrates a process of outputting the amount of change in the capacitance and the pinch occurrence signal with respect to the approach distance of the human body in the non-contact approach state of the human body.

In FIG. 15, an x-axis denotes an approach distance between the sensor strip 10 and the human body, and a y-axis denotes the amount of change in the capacitance measured through the signal processing unit 20.

As illustrated in FIG. 15, when the amount of change in the capacitance detected through the sensor strip 10 increases according to the approach distance of the human body and then becomes greater than or equal to a preset reference value C_{ref}, the signal processing unit 20 determines that the driven object is pinched and thus outputs the pinch occurrence signal.

Thus, the pinch prevention device according to the fourth embodiment of the present invention may detect the pinch through the external contact pressure even when a non-conductive object is inserted into the sensor strip or the surface of the sensor strip 10 is contaminated by foreign substances.

That is, when the non-contact approach state through the first strip electrode 12 and the second strip electrode 13 is not detected due to a non-conductive object or foreign substances, the pinch can be detected by measuring the amount of change in the fourth capacitance 150 that increases by the contact pressure applied to the sensor strip.

Further, the sensor strip 10 according to the fourth embodiment of the present invention can prevent injury of the human body by mitigating an impact generated when the human body comes into contact with the sensor strip through an elastic force of the sensor body 11 made of dielectric elastomer and an elastic force of the hollow part 190 provided between the second strip electrode 13 and the third strip electrode 18.

FIG. 16 is a picture of a sensor strip manufactured according to the fourth embodiment of the present invention.

The sensor strip according to the present invention may be attached, for example, to the vicinity of a mounting position of a PTG lead or a curtain airbag of the vehicle, and may be made of a flexible dielectric elastomer having a length of up to 1.5 m, as illustrated in FIG. 16.

Although exemplary embodiments of the present invention have been described as above, the present invention is not limited to the embodiments, and the present invention includes all changes within the range that is easily changed and is recognized as an equivalent by those skilled in the art to which the present invention pertains.

## Claims

1. A non-contact-type pinch prevention device comprising:
an anti-pinch strip that includes a first conducting wire and a second conducting wire buried in a strip body while spaced apart from each other, and receives and outputs, through the first conducting wire, a detection signal radiated through the second conducting wire;
a sensor board that is connected to the first conducting wire and the second conducting wire of the anti-pinch strip, generates the detection signal in the second conducting wire, and determines whether a human body is detected according to the signal received by the first conducting wire; and
a controller that performs a control operation coping with a human body pinch situation according to a determination signal of the sensor board.

2. The non-contact-type pinch prevention device of claim 1, wherein the sensor board includes a band filter unit that removes noise mixed in the signal received through the first conducting wire.

3. The non-contact-type pinch prevention device of claim 2, wherein the sensor board includes a signal generator that generates the detection signal in the second conducting wire, a signal mixer that extracts a signal having the same frequency as that of the detection signal input from the signal generator from the signal filtered by the band filter unit, and outputs the extracted signal, and a first reception signal determination unit that compares the extracted signal of the signal mixer with a preset reference value and outputs a human body detection signal.

4. The non-contact-type pinch prevention device of claim 3, wherein the sensor board includes a signal amplifier that amplifies a filtered signal of the band filter unit.

5. The non-contact-type pinch prevention device of claim 3, wherein the sensor board includes a reverse-phase signal generator that generates a reverse-phase signal having a phase opposite to that of the detection signal of the signal generator, and
the anti-pinch strip includes a third conducting wire buried to be spaced apart from the second conducting wire, and the third conducting wire radiates the reverse-phase signal of the reverse-phase signal generator.

6. The non-contact-type pinch prevention device of claim 1, wherein the anti-pinch strip includes a fourth conducting wire and a fifth conducting wire buried in a coated body that is integrally formed with a strip body made of rubber and is made of a conductive material, and a hollow part between the fourth conducting wire and the fifth conducting wire, and
the sensor board includes a second reception signal determination unit connected to the fourth conducting wire and the fifth conducting wire, and the second reception signal determination unit outputs a human body detection signal according to a capacitance or resistance that varies according to an interval between the fourth conducting wire and the fifth conducting wire by an external force.

7. A non-contact-type pinch prevention device comprising:
a sensor strip including a sensor body provided on a frame to detect a change in a capacitance or a change in an electric field according to an approach or contact state of a human body, and a plurality of strip electrodes provided inside the sensor body to form at least one capacitance;
a signal processing unit that measures and compares an amount of change in the capacitance or an amount of change in the electric field detected through the sensor strip with a preset reference value, and outputs a pinch occurrence signal when the amount of change in the capacitance or the amount of change in the electric field is greater than or equal to the reference value; and
a controller that controls an operation of a motor for moving the frame according to the pinch occurrence signal output from the signal processing unit.

8. The non-contact-type pinch prevention device of claim 7, wherein the plurality of strip electrodes include a first strip electrode and a second strip electrode that have a strip shape in the sensor body and form a first capacitance inducing the change in the electric field, and
the first strip electrode and the second strip electrode are buried in the sensor body and are made of a conductor of metal or a conductive resin.

9. The non-contact-type pinch prevention device of claim 8, wherein the first strip electrode is provided inside the second strip electrode.

10. The non-contact-type pinch prevention device of claim 9, wherein the second strip electrode is provided to surround a lower end and both side surfaces of the first strip electrode.

11. The non-contact-type pinch prevention device of claim 10, wherein the sensor body is made of a dielectric elastomer having flexibility.

12. The non-contact-type pinch prevention device of claim 11, wherein the signal processing unit measures the amount of change in the first capacitance or the amount of change in the electric field due to a non-contact approach state of the human body, based on the first capacitance or electric field formed before the human body approaches a space between the first strip electrode and the second strip electrode.

13. The non-contact-type pinch prevention device of claim 11, wherein the plurality of strip electrodes further include a third strip electrode, and
a second capacitance is formed between the second strip electrode and the third strip electrode.

14. The non-contact-type pinch prevention device of claim 13, wherein a hollow part that is deformed by an external contact pressure applied to the sensor body is provided between the second strip electrode and the third strip electrode, and
the signal processing unit measures an amount of change in the second capacitance when the hollow part is deformed by the external contact pressure applied to the sensor body.

15. The non-contact-type pinch prevention device of claim 8, wherein the first strip electrode and the second strip electrode are provided in parallel with each other.

16. The non-contact-type pinch prevention device of claim 8, wherein the first strip electrode and the second strip electrode are provided such that the first capacitance is detected at different sensitivities according to an interval therebetween.
